Europäisches Patentamt

**European Patent Office**

Office européen des brevets

(19)

(11) Numéro de publication: **0 057 338 B1**

(12) **FASCICULE DE BREVET EUROPEEN**

(45) Date de publication du fascicule du brevet:
14.08.85

(51) Int. Cl.⁴: **E 05 F 15/16, H 02 P 7/00**

(21) Numéro de dépôt: **81401945.1**

(22) Date de dépôt: **07.12.81**

(54) Boîtier de commande pour moteur d'entraînement de panneau coulissant d'un véhicule, notamment pour lève-glace.

(30) Priorité: **30.01.81 FR 8101793**

(43) Date de publication de la demande:
**11.08.82 Bulletin 82/32**

(45) Mention de la délivrance du brevet:
**14.08.85 Bulletin 85/33**

(84) Etats contractants désignés:
**BE CH DE GB IT LI SE**

(56) Documents cités:
**DE - A - 2 048 740**
**DE - A - 2 549 964**
**FR - A - 2 339 271**
**FR - A - 2 379 686**

(73) Titulaire: **ACIERS ET OUTILLAGE PEUGEOT Société dite:, F-25400 Audincourt (Doubs) (FR)**

(72) Inventeur: **Barge, Jean, 42 Rue d'Audincourt, F-25200 Montbeliard (FR)**

(74) Mandataire: **Moncheny, Michel et al, c/o Cabinet Lavoix 2 Place d'Estienne d'Orves, F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne la commande des panneaux coulissants des véhicules tels que les glaces, les toits ouvrant, etc. Plus précisément, elle a trait à un boîtier de commande pour de tels moteurs d'actionnement d'un panneau coulissant de véhicule dont l'alimentation dans les deux sens d'ouverture et de fermeture peut être commandée à l'aide d'un sélecteur à deux sections affectées chacune à l'un de ces sens, ce boîtier comportant également des moyens pour permettre la sélection de deux vitesses du moteur en fonction d'une durée d'actionnement initiale du sélecteur supérieure ou inférieure à une première période de temps prédéterminée.

Un boîtier de ce type est déjà connue du fasciente de brevet FR-A 2 379 686. Ce boîtier dont le montage est pratiquement entièrement électronique fonctionne de façon satisfaisante, mais présente néanmoins un inconvénient. En effet, à supposer que l'opérateur ait choisi la petite vitesse du moteur, le montage alimente le moteur à une tension plus faible, si bien que sa puissance se trouve diminuée. Or, il arrive fréquemment, surtout avec le vieillissement du véhicule, que les glaces sont difficiles à déplacer à partir de leurs positions extrêmes d'ouverture et de fermeture complètes en raison de points durs qui se créent progressivement dans les éléments de guidage de ces glaces. Cette difficulté est rencontrée en particulier dans la position fermée de la glace en raison de la dureté des joints qui augmente considérablement avec l'âge du véhicule. Une autre cause d'un début d'ouverture difficile peut être le gel, par exemple.

Afin de remédier à cet inconvénient, on a proposé un boîtier de commande permettant de démarrer les mouvements du panneau coulissant à partir des deux positions extrêmes, même si la petite vitesse est sélectionnée d'emblée par l'opérateur.

L'invention vise à perfectionner les dispositifs du type précité.

Elle a donc pour objet un boîtier de commande pour moteur d'actionnement de panneau coulissant de véhicule tel qu'une vitre ou analogue, moteur dont l'alimentation peut être commandée dans les deux sens d'ouverture et de fermeture à l'aide d'un sélecteur à deux sections affectées chacune à l'un de ces sens, ce boîtier comportant également des moyens pour permettre la sélection de deux vitesses du moteur en fonction d'une durée d'actionnement initiale du sélecteur, supérieure ou inférieure à une première période de temps prédéterminée, lesdits moyens permettant la sélection des deux vitesses du moteur comprenant en outre des moyens qui, lorsque la petite vitesse de fonctionnement est sélectionnée alimentent le moteur à grande vitesse pendant une seconde période de temps de démarrage prédéterminée et la première période de temps prédéterminée étant assurée par un circuit de temporisation, caractérisé en ce que ledit circuit de temporisation est connecté de manière à fixer également la seconde période de temps prédéterminée.

Il résulte de ces caractéristiques que le moteur démarre toujours à pleine puissance pour entraîner le panneau coulissant avec un maximum d'efficacité en début de mouvement, et que, si la petite vitesse est sélectionnée d'emblée, le moteur ne passe à cette vitesse qu'après un laps de temps bref mais suffisant pour vaincre les points durs dans le mouvement du panneau coulissant.

De préférence, ladite seconde période de temps de démarrage prédéterminée est égale à la durée de la première période de temps prédéterminée.

L'invention sera mieux comprise à l'aide de la description qui va suivre de plusieurs modes de réalisation de l'invention, à l'aide des dessins annexés sur lesquels:

– la Fig. 1 est un schéma d'un boîtier de commande de lève-glace, mettant en œuvre l'invention;
– la Fig. 2 est une vue en coupe axiale d'un détecteur d'intensité de courant utilisé dans le boîtier de commande de la Fig. 1;
– la Fig. 3 est un schéma d'un circuit permettant de provoquer automatiquement la montée des glaces en fonction de l'actionnement d'une clé de portière, par exemple;
– les Fig. 4 et 4 A sont un schéma d'un mode de réalisation du boîtier suivant l'invention, différent de celui de la Fig. 1;
– la Fig. 5 montre un schéma simplifié de l'implantation d'un boîtier de commande suivant l'invention dans une installation de lève-vitre classique, le boîtier étant monté ultérieurement sur le véhicule;
– la Fig. 6 est un schéma d'un montage comportant un seul boîtier suivant l'invention pouvant être actionné par des sélecteurs de portières de gauche et de droite d'un véhicule et commandant sélectivement les moteurs de lève-glace de ces portières.

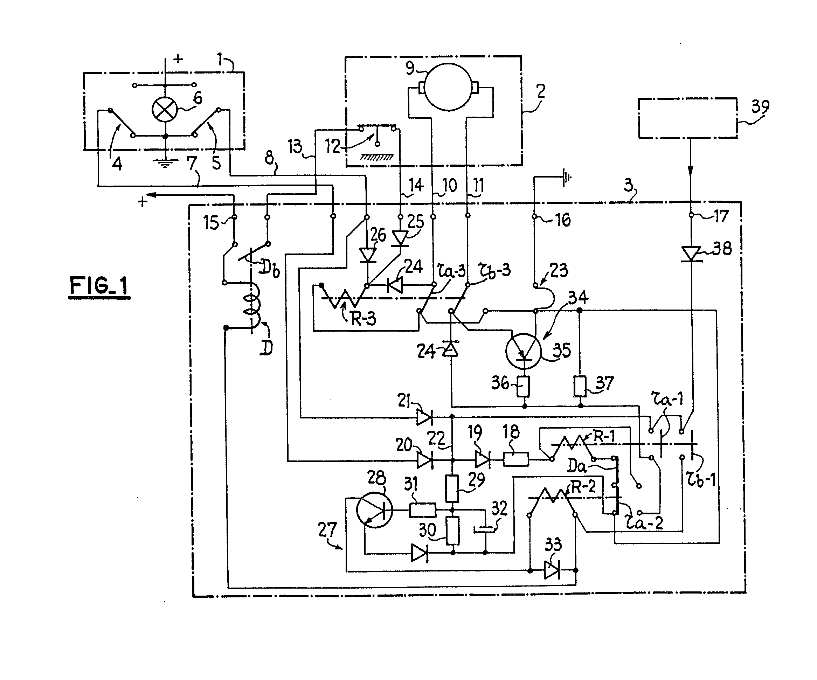

En se référant tout d'abord à la Fig. 1, on va maintenant décrire un premier mode de réalisation de l'invention, appliqué à un lève-vitre de véhicule automobile. Cependant, l'invention n'est pas limitée à cette seule application, la commande d'autres panneaux coulissants pouvant être envisagée à l'aide du boîtier décrit ci-après.

L'installation représentée à la Fig. 1 comporte, en tant qu'unités distincts, un sélecteur 1, une unité motrice 2 et le boîtier de commande 3 proprement dit.

Le sélecteur 1 est placé de préférence à la portée du conducteur du véhicule, par exemple au centre du tableau de bord. Il comporte un inverseur de montée 4, un inverseur de descente 5 et une lampe 6 d'éclairage du sélecteur 1. Celle-ci est raccordée entre le pôle positif de la source d'alimentation (non représenté) et la masse. Les bornes de la lampe sont en outre reliées respectivement aux contacts fixes des inverseurs 4 et 5 dont les contacts mobiles sont reliés au boîtier de commande par l'intermédiaire de conducteurs 7 et 8 respectivement de commande de montée et de commande de descente.

L'unité motrice 2 comporte un moteur électrique 9 à courant continu de type classique qui par l'intermédiaire d'un réducteur actionne le mécanisme de lève-glace, l'ensemble étant classique et n'étant donc pas représenté.

Les bornes du moteur 9 sont raccordées au boîtier de commande 3 par l'intermédiaire de conducteurs 10 et 11. L'unité motrice 2 comporte également un contact 12 de sécurité de fin de course pour détecter l'arrivée en position de fin de course haute de la glace. Ce contact est relié au boîtier de commande 3 par l'intermédiaire de deux conducteurs 13 et 14.

Le boîtier de commande proprement dit est alimenté en tension positive par l'intermédiaire d'une borne 15 et est raccordé à la masse par l'intermédiaire d'une borne 16. Il comprend en outre une borne 17 de commande centralisée dont le but apparaîtra par la suite.

Le boîtier de commande comporte un premier relais R-1 muni de deux contacts de travail $r_a$-1 et $r_b$-1 dont le second est le contact d'auto-alimentation de la bobine de ce relais. Ce dernier est appelé ci-après relais de commande de grande vitesse.

Il est également prévu un second relais R-2 comportant un contact de commutation $r_a$-2 et appelé ci-après relais de commande de petite vitesse. Le boîtier de commande comporte enfin un troisième relais R-3 comportant deux contacts inverseurs $r_a$-3 et $r_b$-3 et ce relais a pour rôle d'inverser le sens de rotation du moteur électrique 9.

La borne d'alimentation positive 15 du boîtier de commande 3 est reliée à un détecteur D d'intensité de courant qui est associé à au moins un contact de commande désigné par les références respectives $D_a$ et $D_b$.

Le détecteur comporte une bobine de quelques spires raccordée directement à la borne positive 15 et par ailleurs à l'une des bornes de la bobine du relais R-2. Cette même borne est connectée au contact d'auto-alimentation $r_b$-1 du relais R-2.

La bobine du relais R-1 est connectée d'une part au contact $D_a$ du détecteur 2 et d'autre part à une résistance chutrice 18 qui est connectée en série avec le moteur d'entraînement 9 et également avec deux diodes en série 19 et 20 raccordées elles-mêmes en série avec le contact inverseur 4 du sélecteur 1. Le point de jonction entre la bobine du relais R-1 et la résistance 18 est connecté à l'un des côtés du commutateur $r_a$-2 du relais R-2 (position de travail), l'autre côté de ce même contact étant raccordé au contact $r_a$-1 du relais R-1. Le côté opposé de ce même contact est relié au contact d'auto-alimentation $r_b$-1 et également par l'intermédiaire d'une diode 21 au conducteur 8 et delà au contact inverseur 5 du sélecteur 1. Le point de jonction entre les diodes 19 et 20 est relié par un conducteur 22 au point de jonction entre la diode 21 et le contact de travail $r_a$-1 du relais R-1.

Les bornes du moteur 9 sont reliées aux contacts mobiles des inverseurs $r_a$-3 et $r_b$-3 du relais R-3 dont les contacts fixes, au nombre de trois sont reliés de la façon suivante. Les points de contact extérieurs sont reliés respectivement ensemble à l'un des côtés de la bobine du relais R-3 et à la masse par l'intermédiaire d'un élément de protection thermique 23. Le point de contact intermédiaire fixe du relais R-3 est raccordé par l'intermédiaire d'une diode 24 à l'un des côtés du contact de travail $r_a$-1 du relais R-1.

La bobine du relais R-3 est connectée par l'intermédiaire d'une diode 24 au contact mobile $r_a$-3 de ce relais, l'extrémité correspondante de cette bobine étant également connectée d'une part par l'intermédiaire d'une diode 25 au conducteur 14 et de là au contact de fin de course 12, et d'autre part, par l'intermédiaire d'une diode 26, au conducteur 8 et de là à l'inverseur de descente 5 du sélecteur 1.

Le contact de fin de course 12 est relié par l'intermédiaire du conducteur 13 au contact $D_d$ ouvert au repos, du détecteur D d'intensité de courant, c'est-à-dire à l'extrémité de ce dernier qui est reliée à la borne positive de la source d'alimentation.

Le boîtier de commande comporte également un circuit de temporisation 27 dont le composant actif est un transistor 28 relié de la façon suivante. Un diviseur de tension composé de résistances 29 et 30 est relié d'une part au point de jonction entre les diodes 19 et 20 et d'autre part à l'un des côtés du commutateur $r_a$-2 (position de repos) du relais R-2. Le point de jonction entre les résistances 29 et 30 est relié par l'intermédiaire d'une résistance 31 à la base du transistor 28. La résistance 30 est reliée en parallèle à un condensateur 32. Le point commun de la résistance 30 et du condensateur 32 est connecté par l'intermédiaire d'une diode à l'émetteur du transistor 28 dont le collecteur est branché au point commun entre une diode 33 et l'une des bornes de la bobine du relais R-2, la diode 33 étant branchée en parallèle sur cette bobine.

Le boîtier de commande comporte également un circuit 34 d'arrêt bursque du moteur 9, le composant actif de ce circuit étant un transistor 35 dont la base est reliée par l'intermédiaire d'une résistance 36 au point de jonction de la diode 24 et de l'un des côtés du contact de travail $r_a$-1 du relais R-1. L'émetteur du transistor 35 est connecté au contact fixe intermédiaire des inverseurs $r_a$-3 et $r_b$-3 du relais R-3. Le collecteur du transistor 35 est connecté à l'élément de sécurité thermique 23. Une résistance 37 est reliée à ce même élément de sécurité 23 et également au point commun de la diode 24 et de la résistance 36.

La borne 17 de commande centralisée est reliée par l'intermédiaire d'une diode 38 au contact de travail $r_b$-1 du relais R-1. Il est à noter que les organes de commande centralisés sont symboliquement désignés par le rectangle portant la référance 39.

Le fonctionnement du montage de la Fig. 1 est le suivant.

Comme il a déjà été décrit ci-dessus, le moteur 9 est du type à courant continu couplé à un réducteur.

Il peut comporter ou non son propre disjoncteur thermique interne.

Le disjoncteur thermique 23 qui est placé dans le boîtier de commande 3 a pour but d'assurer l'arrêt en fin de course haute ou basse de la vitre et d'éviter le montage du contact de fin de course 12 dans la portière. Par conséquent, ce contact peut être prévu facultativement.

Le relais R-1 assure le fonctionnement en grande vitesse lorsque le sélecteur 1 reçoit une commande brève de l'opérateur.

Le relais R-2 assure le fonctionnement à petite vitesse lorsque l'opérateur actionne le sélecteur plus longuement et ce relais permet de mettre en circuit la résistance chutrice 18.

Le relais R-3 impose le sens de rotation au moteur 9 qui tourne dans le sens de la montée lorsque le relais n'est pas excité et dans le sens opposé dans le cas contraire.

Le circuit de temporisation 27 retarde l'excitation de la bobine du relais R-2 dans le cas où le sélecteur reçoit une commande prolongée. Cet aspect important de l'invention sera expliqué plus en détail ci-après. Il est à noter que la fonction de temporisation assurée dans l'exemple par le circuit de temporisation 27 peut être intégré dans la construction même du relais R-2 comme cela est classique dans la technique.

Le circuit 34 assure l'arrêt brusque du moteur 9 et il est à noter que ce circuit n'est pas indispensable pour la réalisation des fonctions essentielles du boîtier de commande.

Le contact $D_a$, fermé au repos et associé à la bobine du détecteur D d'intensité de courant, constitue un dispositif de sécurité qui assure l'arrêt du moteur 9 lorsqu'il est alimenté en grande vitesse.

Le contact $D_b$, ouvert au repos, et associé également à la bobine du détecteur D est monté en série avec le contact de fin de course 12 pour assurer l'inversion de marche du moteur 9 dans le cas où l'intensité du courant d'alimentation de ce dernier devient supérieure à une limite prédéterminée, l'action de ce contact $D_b$ étant neutralisée par l'ouverture du contact de fin de course 12 lorsque la vitre est proche de la fermeture totale.

Lorsque l'un ou l'autre des inverseurs 4 ou 5 du sélecteur 1 est actionné brièvement par l'opérateur, la tension d'alimentation positive est appliquée brièvement soit au conducteur 7 soit au conducteur 8 pour provoquer la commande du moteur 9 dans le sens correspondant.

En effet, la commande brève de l'un des inverseurs 4 et 5 excite la bobine du relais R-1 par un circuit formé respectivement à travers l'une ou l'autre des diodes 21 ou 22, la diode 19, la résistance chutrice 18, la bobine du relais R-1, le contact $D_a$ et le contact $r_1$-2 qui est relié à la masse par l'intermédiaire du disjoncteur thermique 23. Le relais R-1 est alors immédiatement autoalimenté par l'intermédiaire de son contact $r_b$-1 qui branche la bobine du relais à la borne positive de la source d'alimentation à travers la bobine du détecteur D. Dans ce cas, le moteur 9 est alimenté à pleine tension et fonctionne à grande vitesse en étant alimenté à travers la diode 24 et les contacts $r_a$-1 et $r_b$-1. Bien entendu, le relais R-3 est excité lorsque l'opérateur actionne l'inverseur 5 du sélecteur 1 à travers le conducteur 8 et la diode 26 et la bobine de ce relais reste auto-alimentée par le contact mobile $r_a$-3. Dans le cas contraire, c'est-à-dire lorsque l'opérateur sélectionne l'inverseur 4, le relais R-3 n'est pas excité et le courant traverse le moteur dans le sens opposé. On va maintenant examiner le cas dans lequel l'opérateur effectue une action prolongée sur l'un ou l'autre des inverseurs 4 et 5 du sélecteur 1. Au début de l'opération, tout se passe de la même façon que décrit précédemment c'est-à-dire que le moteur est commandé d'emblée à grande vitesse par les mêmes circuits que décrits ci-dessus. Cette caractéristique essentielle de l'invention permet, même si la vitesse faible est choisie par l'opérateur, d'obtenir un couple moteur maximal pour décoller la vitre de sa position de fermeture ou d'ouverture totale et pour lutter également contre d'autres coincements mécaniques possibles.

La commande des inverseurs 4 et 5 du sélecteur 1 provoque dans tous les cas le démarrage de la temporisation du circuit 27 dont le circuit RC constitué par la résistance 30 et le condensateur 32 détermine une période de temps prédéterminée qui est par exemple de l'ordre de 0,5 seconde. Si l'action sur les inverseurs 4 et 5 se prolonge au-delà de cette période prédéterminée, le transistor 28 est rendu conducteur par la tension développée aux bornes du circuit RC mentionnées ci-dessus établissant ainsi un circuit d'alimentation pour la bobine du relais R-2. L'excitation de ce relais provoque l'inversion du commutateur $r_a$-2 ce qui a pour effet:

1) l'arrêt de l'excitation du relais R-1 et l'ouverture de ces contacts, le moteur 9 étant ainsi coupé de l'alimentation à travers un circuit direct;
2) l'alimentation du moteur à travers la résistance chutrice 18 par l'intermédiaire de la diode 20 ou 21, de la diode 19, du commutateur $r_a$-2, de la diode 24 et des contacts $r_a$-3 et $r_b$-3 du relais R-3.

Le moteur 9 étant ainsi alimenté à travers la résistance chutrice 18, il reçoit une plus faible tension et tourne donc à faible vitesse pour permettre un réglage plus fin des positions d'arrêt de la vitre voulues.

Lorsque l'un ou l'autre des inverseurs 4 ou 5 est relâché, la vitre s'arrête dans la position désirée, car le moteur 9 étant alimenté à travers l'inverseur respectif, il ne reçoit plus d'énergie.

Le fonctionnement du circuit 34 d'arrêt brusque est basé sur le fait que tout moteur à courant continu à aimant permanent fonctionne en générateur lorsqu'il tourne à vide et produit à ces bornes une tension de même polarité que sa tension d'alimentation pour un sens de rotation donné. On sait également qu'un tel moteur s'arrête immédiatement lorsqu'on court-circuite ces bornes.

Si le moteur 9 tourne dans le sens de la montée, il produit une tension positive sur le conducteur 11 lorsque son alimentation est coupée et s'il tourne dans le sens de la descente de la vitre, il produit une tension positive sur le conducteur 10. Dans ce cas, le relais R–3 est actionné et la tension positive est donc transmise sur le contact intermédiaire fixe du relais R–3, ce contact étant connecté à la diode 24.

Dans les deux cas, comme l'alimentation à travers cette diode est coupée par hypothèse, et en raison de la présence de l'impédance formée par cette diode, le potentiel du contact intermédiaire sus-mentionnée est supérieur sur la cathode de la diode que sur son anode. Il en résulte la conduction du transistor 35 dont le circuit émetteur-collecteur est alors branché en parallèle sur le moteur 9. Ce dernier étant court-circuité, son arrêt est brutal quel que soit le sens de rotation.

Toute action sur le sélecteur 1 se traduit par la rotation du moteur sans temps mort, lorsque le montage est au repos.

Lorsqu'un ordre est donnée par les inverseurs 4 ou 5 et lorsqu'un changement de sens immédiat est désiré par l'opérateur, le circuit exécute immédiatement l'inversion de sens en ce qui concerne la montée rapide.

Si le moteur 9 fonctionne à grande vitesse dans le sens de la montée, un ordre de descente provoqué par l'inverseur 5 excite le relais R–3 qui provoque l'inversion de sens immédiat.

Si le moteur 9 fonctionne à grande vitesse dans le sens de la descente, un ordre de montée transmis par le conducteur 7 provoque l'arrêt du moteur. En effet, à grande vitesse et en descente, les relais R–1 et R–3 sont excités et auto-alimentés.

Si l'ordre transmis sur le conducteur 7 est inférieur à la période de temporisation du circuit 27, rien ne se passe, s'il est supérieur à cette période, le moteur passe en petite vitesse et s'arrête lorsqu'on relâche l'inverseur 4 ou 5; il suffit alors de donner l'ordre voulu pour provoquer l'inversion.

Si le moteur fonctionne à petite vitesse, la temporisation s'est écoulée, l'inverseur 4 ou 5 est donc maintenu et les relais R–1 et R–3 retombent. Le relais R–2 est actionné dès qu'on veut inverser le sens, on passe donc par la position intermédiaire de l'inverseur 4 ou 5, puis le circuit est alimenté pour le sens inverse.

Le disjoncteur thermique 23 est toujours traversé par le courant consommé par l'ensemble du circuit et principalement par le moteur 9. Si l'intensité de ce courant dépasse un certain seuil prédéterminé, le disjoncteur ouvre le circuit de retour général à la masse, si bien que les relais retombent au repos même si l'inverseur 4 ou 5 est actionné.

Ainsi, le circuit permet de réaliser:

– l'arrêt total en cas d'un court-circuit accidentel quelconque, donc la protection générale du circuit électrique du véhicule;

– l'arrêt total en fin de course haute et basse de la vitre, même si l'opérateur continue à agir sur l'inverseur 4 ou 5;

– l'arrêt en position intermédiaire, suite à un coincement accidentel de la glace causé par un obstacle quelconque ou une augmentation exagérée de la résistance mécanique opposée au mouvement de la vitre.

Des pannes venant des composants électroniques sont possibles et principalement la détérioration des transistors 28 et 35:

– la détérioration du transistor 35 n'a aucune influence, sinon l'arrêt moins brusque du moteur 9. Par ailleurs, son court-circuit sera bref et fera fusible;

– la détérioration du transistor 28 permet toujours le fonctionnement en grande vitesse. S'il est en court-circuit, le fonctionnement en petite vitesse est toujours possible. D'ailleurs, l'emploi d'un relais temporisateur mécanique pour le relais R–2 permettrait de s'affranchir du transistor 28.

Il en résulte que, quelle que soit la panne des composants électroniques les plus délicats, la fonction de fermeture ou d'ouverture reste assurée au gré de l'opérateur, les sécurités étant par ailleurs assurées.

Le montage qui a été décrit permet en outre d'assurer des sécurités particulières qui sont d'une part l'arrêt de la vitre lorsqu'elle rencontre un obstacle en étant déplacée en montée à grande vitesse et d'autre part l'inversion du mouvement de la vitre sur un obstacle pendant ce même mouvement.

Ces deux fonctions de sécurité sont assurées par le contact $D_a$ qui est ouvert lorsque le courant circulant dans la bobine du détecteur D dépasse une intensité prédéterminée. Cette bobine détecte l'intensité du courant qui circule dans le moteur lorsque celui-ci actionne la vitre à grande vitesse en montée ou en descente. Si le contact $D_a$ s'ouvre, l'alimentation de la bobine du relais R–1 est coupée et le circuit du moteur 9 est interrompu. Le détecteur de courant D peut être réglé pour un seuil d'intensité suffisant pour que le mouvement de la vitre ne risque pas de blesser des personnes dont les membres pourraient constituer un obstacle à son mouvement.

L'inversion du mouvement de la vitre peut être assurée par le contact $D_b$ qui est commandé également par la bobine du détecteur D. En effet, lorsque le seuil précédemment décrit est franchi, ce contact $D_b$ se ferme est excite le relais R–3 qui inverse le sens de rotation du moteur 9 pour la descente. L'action du contact $D_b$ est neutralisée lorsque la vitre se trouve dans sa position de fermeture haute parce que dans ce cas, le contact de fin de course 12 est ouvert et la bobine du relais R–3 ne peut donc pas être excitée.

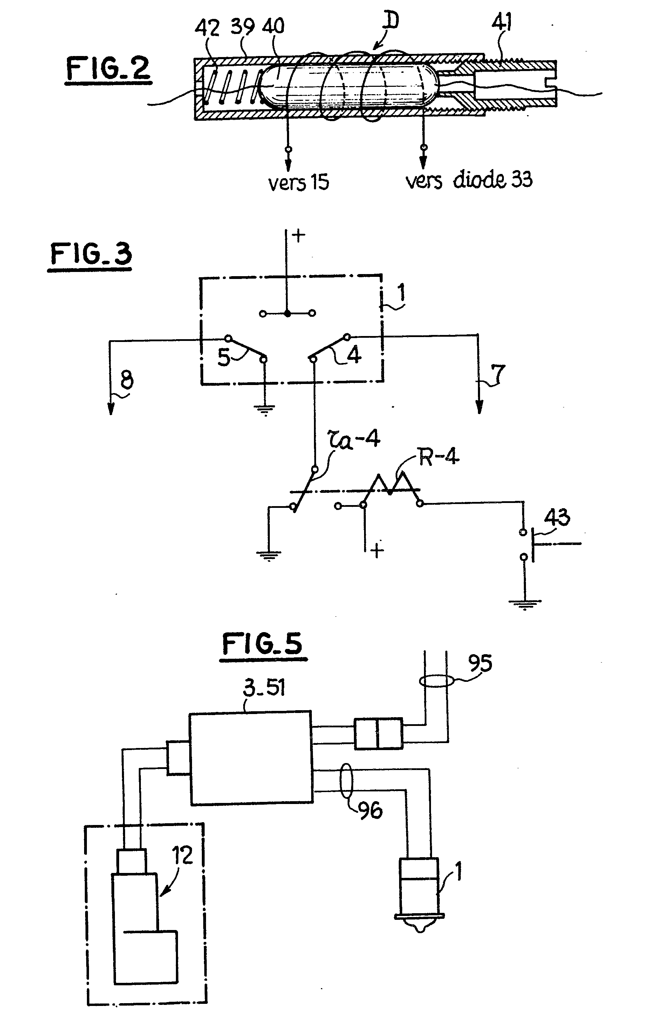

Sur la Fig. 2 on a représenté un mode de réalisation avantageux du détecteur de courant D. Celui-ci comporte un manchon 39 dans lequel est logée une ampoule 40 dans laquelle sont placés plusieurs contacts à lames souples, l'ampoule étant par ailleurs mise sous vide. Le manchon est entouré par une bobine qui peut être avantageusement constituée par quelques spires du conducteur reliant la borne 15 au point commun entre la bobine du relais R–2 et la diode 33. Le manchon 39 est taraudé à l'une de ses extrémités pour recevoir une vis de réglage 41 du seuil de sensibilité du détecteur D. A l'extrémité opposée, le manchon contient un ressort de rappel 42 qui agit en opposition par rapport au vissage vers l'intérieur de la vis 41. Le réglage de celui-ci provoque ainsi un déplacement dans l'un ou l'autre sens de l'ampoule 40 par rapport à la bobine du détecteur D.

Un tel détecteur de courant présente un avantage particulier par rapport au dispositif de détection d'intensité de courant utilisé habituellement dans ce genre de montage et comportant comme composant essentiel une résistance de faible valeur montée en série avec le moteur d'entrainement du lève-vitre. Une telle résistance provoque une forte chute de tension qui se répercute dans une mesure importante sur la tension totale d'alimentation qui dans le cas des véhicules est relativement faible (12 volts par exemple). Or, dans ce cas, il est nécessaire de fabriquer un moteur d'entraînement spécial fonctionnant à la tension du réseau du véhicule diminuié de la chute de tension sur la résistance de détection alors que grâce au détecteur que l'on vient de décrire, la chute de tension étant nettement plus faible, on peut utiliser pour le moteur 9 un moteur standard à 12 volts communément employé pour la réalisation des lève-vitres simples bien connus dans la technique. Le boîtier de commande 3 peut ainsi être facilement adapté à des lève-vitres existants montés sur véhicule. Bien entendu, le détecteur de courant D permet également de réduire la consommation d'énergie de l'ensemble du montage.

L'ordre de fermeture de la vitre peut également provenir d'une commande centralisée branchée sur tous les lève-vitres du véhicule. Lorsque cette commande est actionnée, une impulsion positive d'une durée plus ou moins longue peut être appliquée au contact $r_b$–1 du relais R–1. Si cette durée est supérieure au temps fixé par le circuit de temporisation 27, il s'en suit une commande à vitesse lente de la vitre et si cette durée est inférieure, celle-ci est actionnée à grande vitesse. Le premier cas permet à l'utilisateur d'obtenir facilement l'aération du véhicule par un entrebaillement des vitres.

La Fig. 3 montre un montage simple permettant de réaliser une commande centralisée par l'intermédiaire d'un organe de condamnation du véhicule telle qu'une clé actionnant la serrure de la portière du conducteur, par exemple.

Le montage en question comporte un relais R–4 dont la bobine commande un contact inverseur $r_a$–4. La bobine de ce relais est reliée à la masse par l'intermédiaire d'un contact de travail 43 actionné par l'organe de condamnation du véhicule. La bobine est également reliée à la borne positive de la source d'alimentation et à l'un des contacts fixes de son inverseur dont l'autre contact est relié à la masse. Le contact mobile $r_a$–4 est relié à l'inverseur 4 de la vitre, l'autre inverseur 5 de ce sélecteur étant relié comme dans le cas de la Fig. 1.

On comprend que lorsque le contact 43 est fermé, la bobine du relais R–4 est actionnée et de ce fait une impulsion de tension positive de durée plus ou moins longue est appliquée par l'intermédiaire de l'inverseur 4 du sélecteur 1 au conducteur 7 pour commander l'alimentation du moteur 9 dans le sens de la montée de la vitre. Cette commande peut être réalisée en grande ou en petite vitesse en fonction de la durée d'actionnement du contact 43 comme cela est le cas avec les inverseurs 4 et 5 comme précédemment décrit.

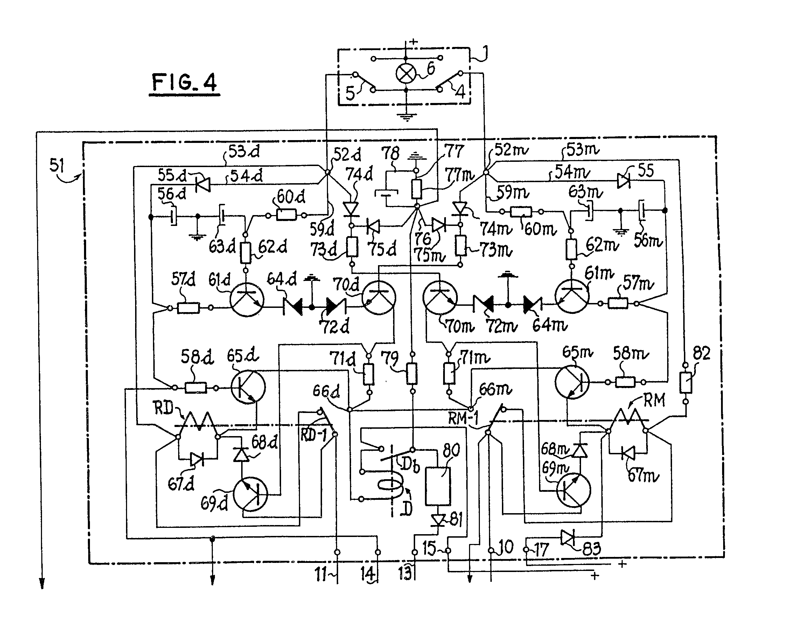

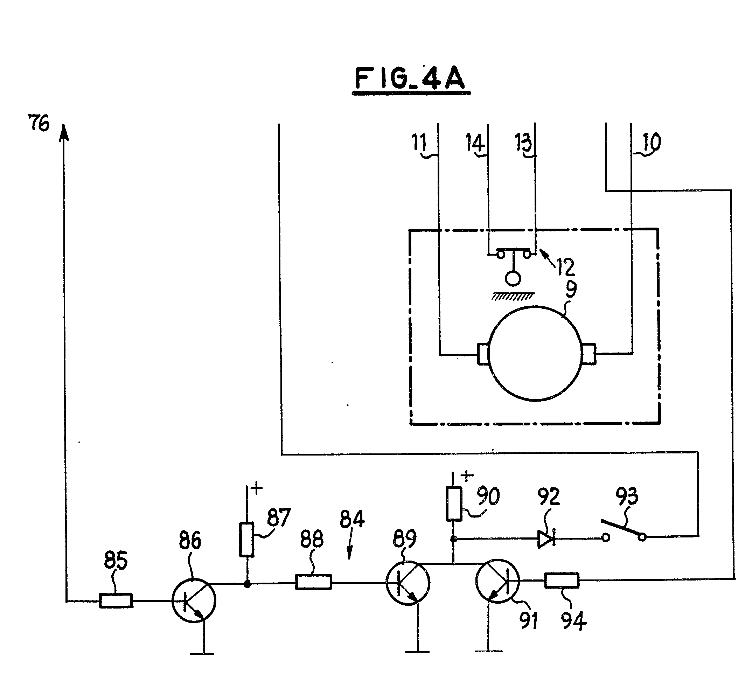

On va maintenant décrire un second mode de réalisation de l'invention qui est représenté sur la Fig. 4. Dans ce cas, il s'agit d'un boîtier d'asservissement 51 connecté, comme le boîtier de commande 3 de la Fig. 1 à un sélecteur 1 construit de la même façon que précédemment et à une unité motrice comportant un moteur 9 et un contact de fin de course 12 également comme précédemment décrit. Comme on peut le constater, le circuit représenté sur la Fig. 4 comporte deux parties quasi-symétriques et on désignera donc les éléments symétriques correspondants par des indices d (pour descente) et m (pour montée). Ces éléments pour autant qu'ils soient identiques et ont la même fonction dans les deux parties symétriques du circuit ne seront décrits qu'une seule fois.

Ceci étant, on voit que sur la partie de gauche du schéma de la Fig. 4 qui est affectée à la commande en descente de la vitre, le boîtier de commande comporte un point de jonction 52d auquel aboutissent quatre conducteurs. Un premier 53d de ces conducteurs est connecté à une bobine de relais RD, un second 54d de ces conducteurs étant relié par l'intermédiaire d'une diode 55d à un condensateur 56d, à une résistance 57d et à une autre résistance 58d. Le troisième conducteur 59d est connecté à une résistance 60d, le condensateur 56d est relié par ailleurs à la masse. La résistance 57d est reliée au collecteur d'un transistor 61d dont la base est reliée par l'intermédiaire d'une résistance 62d à un point de jonction formé entre un condensateur 63d relié par ailleurs à la masse et la résistance 62d. L'émetteur du transistor 61d est relié par l'intermédiaire d'une diode Zener 64d à la masse.

La résistance 58d est reliée à la base d'un transistor 65d dont l'émetteur est connecté à la bobine du relais RD et dont le collecteur est connecté à un point de jonction 66d formé par l'un des contacts fixes de l'inverseur RD–1 commandé par la bobine du relais RD. Le point de jonction 66d constitue le contact de travail de l'inverseur RD–1.

La bobine du relais RD est shuntée par une diode 67d et l'extrémité de cette bobine qui est reliée à l'émetteur du transistor 65d est connectée à une autre diode 68d reliée à son tour à l'émetteur d'un autre transistor 69d. La base de ce transistor est connectée au collecteur d'un quatrième transistor 70d et à une résistance 71d. Le collecteur du transistor 69d est relié au contact mobile de l'inverseur RD-1 qui est également relié au conducteur 11 d'alimentation du moteur 9.

L'émetteur du transistor 70d est connecté par l'intermédiaire d'une diode Zener 72d à la masse tandis que sa base est reliée à une résistance 73m. L'équivalent de cette résistance dans la partie descente du boîtier de commande c'est-à-dire la résistance 73d est connectée à la base du transistor 70m et par son autre borne au point de jonction 52d par l'intermédiaire d'une diode 74d. Cette même borne de la résistance 73d est connectée par une diode 75d à un point de jonction 76 qui est commun aux deux parties du boîtier de commande et qui est reliée par une résistance 77 shuntée par un condensateur 78 à la masse. Le point de jonction 76 est relié également à une résistance commune 79 dont l'autre extrémité est reliée au contact $D_b$, ouvert au repos, du détecteur D d'intensité de courant, ce dernier étant identique à celui décrit à propos de la Fig. 1.

La bobine de ce détecteur est reliée à ce contact $D_b$ et également aux points de jonction 66d et 66m. Le contact $D_b$ est relié également à un circuit de temporisation 80 qui est relié par l'intermédiaire d'une diode 81 à l'un des côtés du contact de fin de course 12. L'autre côté de ce contact est relié par ailleurs à l'une des extrémités de la résistance 58d.

Le boîtier comporte également une résistance chutrice 82 qui est reliée dans la partie montée du boîtier de commande entre la bobine du relais RM et le point de jonction 52m. Enfin, dans cette même partie de montée du boîtier de commande, il est prévu une diode 83 qui est reliée entre la borne 17 et la bobine du relais RD pour permettre la fermeture centralisée de la façon décrite à propos des Fig. 1 et 3.

Le boîtier de commande 51 comporte également un circuit 84 pour assurer une inversion du mouvement du lève-glaces lorsqu'un obstacle est rencontré, cette inversion n'étant réalisée que sur une certaine distance. L'entrée de ce circuit est constituée par le point de jonction 76 qui est relié par l'intermédiaire d'une résistance 85 à un transistor 86 dont l'émetteur est relié à la masse et dont le collecteur est connecté d'une part à la borne positive de la tension d'alimentation par l'intermédiaire d'une résistance 87 et d'autre part par l'intermédiaire d'une résistance 88 à la base d'un autre transistor 89. L'émetteur de ce dernier est connecté également à la masse et son collecteur est relié à la tension positive par une résistance 90 et au collecteur d'un quatrième transistor 91 dont l'émetteur est relié à la masse.

Les collecteurs communs des transistors 89 et 91 sont reliés par une diode 92 et un contact ouvert au repos 93 au point de jonction entre les résistances 57d et 58d. La base du transistor 91 est reliée par une résistance 94 au contact mobile RM-1 du relais RM.

Le fonctionnement de la Fig. 4 est le suivant.

Comme déjà indiqué, les mouvements de montée et descente de la vitre sont réalisés par des circuits symétriques.

Les bornes du moteur 9 sont court-circuitées au repos par l'intermédiaire des inverseurs 4 et 5 du sélecteur en passant par les points de jonction 52d et 52m et les contacts inverseurs des relais RD et RM.

La grande vitesse est obtenue à la descente par l'inverseur RD-1 du relais R-2 et à la montée par l'inverseur RM-1 du relais RM.

La petite vitesse est obtenue en plaçant la résistance 82 en série dans l'alimentation du moteur 9 quelque soit le sens de déplacement désiré. Le sens de rotation du moteur 9 est commandé directement par les inverseurs 4 et 5 du sélecteur 1. Les ensembles symétriques constitués d'une part par le transistor 61d, la diode Zener 64d, le condensateur 63d, la résistance 60d, la résistance 62d et la résistance 57d d'une part et le transistor 61m, la diode Zener 64m, le condensateur 63m et les résistances 60m, 62m et 57m constituent respectivement des circuits temporisateurs.

Les ensembles symétriques constitués par les transistors 65d, 65m, la résistance 58d, 58m commandent la bobine respective du relais RD ou RM.

Les ensembles symétriques montés autour des transistors 69d et 69m et 70d et 70m respectivement assurent l'auto-alimentation de leurs relais associés.

Si l'un ou l'autre des inverseurs 4 et 5 est actionné brièvement, une impulsion positive inférieure au temps fixé par la temporisation (inférieure à 0,5 seconde par exemple) porte au potentiel positif le point de jonction respectif 52d ou 52m. Il en résulte que le transistor 65d ou 65m reçoit un potentiel positif à la fois sur sa base par l'intermédiaire de la diode 55d, 55m et la résistance 58d ou 58m et sur son émetteur au travers de la bobine RD ou RM. Son collecteur reçoit également une tension positive par l'intermédiaire des points de jonction 66d et 66m respectifs. Ce transistor est donc bloqué et le contact RD-1 ou RM-1 reste au repos, ce qui alimente le moteur 9. Si c'est l'inverseur 5 qui est actionné, cette alimentation est réalisée par l'intermédiaire de la résistance 82 et si au contraire c'est l'inverseur 4 qui est actionné, cette résistance reste branchée dans le circuit du moteur. Cette particularité évite l'emploi de ressorts de compensation à la descente pour palier le poids de la vitre. Les grandes vitesses en montée et en descente sont ainsi pratiquement identiques.

Lorsque l'un ou l'autre des sélecteurs 4 ou 5 est relâché avant que le temps de temporisation soit écoulé, le potentiel positif appliqué par le sélecteur 4 ou 5 sur le point de jonction 52d ou 52m disparaît et devient nul par retour à la masse dans le sélecteur 1.

Il en résulte que le transistor 61d ou 61m reste bloqué tandis que le transistor 65d ou 65m devient conducteur puisque, le condensateur 56d ou 56m étant déchargé, la base de ce transistor est plus positive que son émetteur qui est reliée à la masse. Il en résulte l'alimentation de la bobine RD ou RM qui bascule son contact ce qui relié le moteur 9 à la borne d'alimentation 15 du montage.

La bobine des relais RD ou RM est auto-alimentée par son propre contact inverseur et le transistor 69d ou 69m associé. Ce dernier transistor est devenu conducteur dès que son collecteur a été porté à un potentiel positif donc dès que le contact inverseur du relais bascule. Le déplacement se poursuit à grande vitesse jusqu'à position extrême haute ou basse de la vitre.

On remarquera que lorsque la descente est commandée, la résistance chutrice 82 reste en circuit et le moteur est alimenté à faible puissance pour tenir compte de poids du panneau.On peut ainsi éliminer les ressorts de compensation habituellement prévus dans les lève-vitres.

Si le contact 12 n'est pas prévu, la vitre est alors arrêtée mécaniquement dans les deux cas et l'intensité du courant absorbée par le moteur 9 augmente fortement au-delà d'un seuil fixé par le détecteur D qui ferme le contact $D_b$. La fermeture de ce contact provoque la polarisation à une tension positive de la base du transistor 70d ou 70m qui devient donc conducteur en bloquant le transistor 69d ou 69m, ce qui coupe l'auto-alimentation du relais associé et l'arrêt du moteur 9.

On va maintenant examiner le cas où l'opérateur actionne l'un ou l'autre des inverseurs 4 ou 5 pendant une durée supérieure à la durée de temporisation introduite par les transistors 61d ou 61m et leur circuit associé. Le fonctionnement est identique tant que cette durée ne s'est pas écoulée et dès que la base du transitor 61d ou 61m est polarisée par la charge du condensateur 63d ou 63m, le transistor devient conducteur en bloquant le transistor 65d ou 65m associé. La bobine du relais associée ne peut alors être excitée et les contacts RD-1 ou RM-1 restent au repos. Le mouvement de la vitre se poursuit ainsi, le moteur 9 étant directement alimenté par l'inverseur 4 ou 5 du sélecteur à travers la résistance chutrice 82 et il continue à être alimenté tant que le sélecteur est actionné.

Il est à noter que dès que cette action cesse, le moteur est court-circuité ce qui en provoque l'arrêt brusque, de sorte que le positionnement de la vitre peut être précis en fonction de la commande effectuée par l'opérateur.

Les fonctions de sécurité déjà expliquées à propos du montage de la Fig. 1 se retrouvent dans le montage de la Fig. 4 et il n'est donc nécessaire d'y revenir ici. Il suffit de noter que le détecteur D sert également de disjoncteur de protection lorsqu'il se produit un court-circuit interne accidentel dans le montage. Ce dernier ne comporte donc pas de sécurité thermique comme c'est le cas dans le montage de la Fig. 1. On notera également que le montage de la Fig. 4 présente une fonction d'antiagression car la volonté de l'opérateur est prioritaire de telle sorte que si l'obstacle interposé à la fermeture de la vitre est constitué par un objet dur, la fermeture de la vitre est toujours tentée à petite vitesse. En effet, l'action prolongée sur le sélecteur 1 alimente constamment le moteur 9 pour l'obliger à fournir sa puissance sans que le détecteur D en tant qu'élément de sécurité puisse intervenir. Par ailleurs, en cas de défaillance des composants électroniques, l'actionnement du moteur 9 peut être réalisé à petite vitesse.

La fermeture centralisée peut également être réalisée par l'application d'une impulsion de tension positive sur la borne 17.

On va décrire maintenant le fonctionnement du circuit permettant d'opérer une inversion du mouvement de la vitre sur une certaine distance à la suite de la rencontre d'un obstacle à la fermeture de la vitre. Ce circuit comporte les transistors 86, 89 et 91. Pour détecter cet état de chose, il convient de constater si la vitre se déplace dans le sens de la montée et il convient également de détecter l'intensité absorbée par le moteur 9.

La base du transistor 86 constate si le contact $D_b$ est fermé ou en d'autres termes si l'intensité considérée comme un seuil a été dépassée. Le transistor 86 inverse ce signal pour l'appliquer au transistor 89 et constitue l'une des entrées de la porte ET constituée par les transistors 89 et 91. Le transistor 91 constate si le moteur 9 tourne vers le sens de la montée en détectant la tension du contact mobile RD-1 du relais RM-1. Si les deux signaux sont présents, un signal est appliqué au point de jonction entre les résistances 57d et 58d ce qui alimente le moteur 9 dans le sens de la descente.

Il est à noter que la temporisation intervenant dans l'alimentation du moteur dans ces conditions est introduite par la combinaison du condensateur 78 et de la résistance 79.

Quelle que soit la réalisation du boîtier de commande, il est possible de le loger dans la portière près du moteur du lève-vitre. Cette solution est avantageuse lorsqu'on ne veut équiper qu'une portière (ou les deux portières avant) et que la sécurité de fermeture est assurée par le contact de fin de course 12. Cette solution est avantageuse également si l'équipement de lèvre-vitre est monté sur le véhicule à la fabrication.

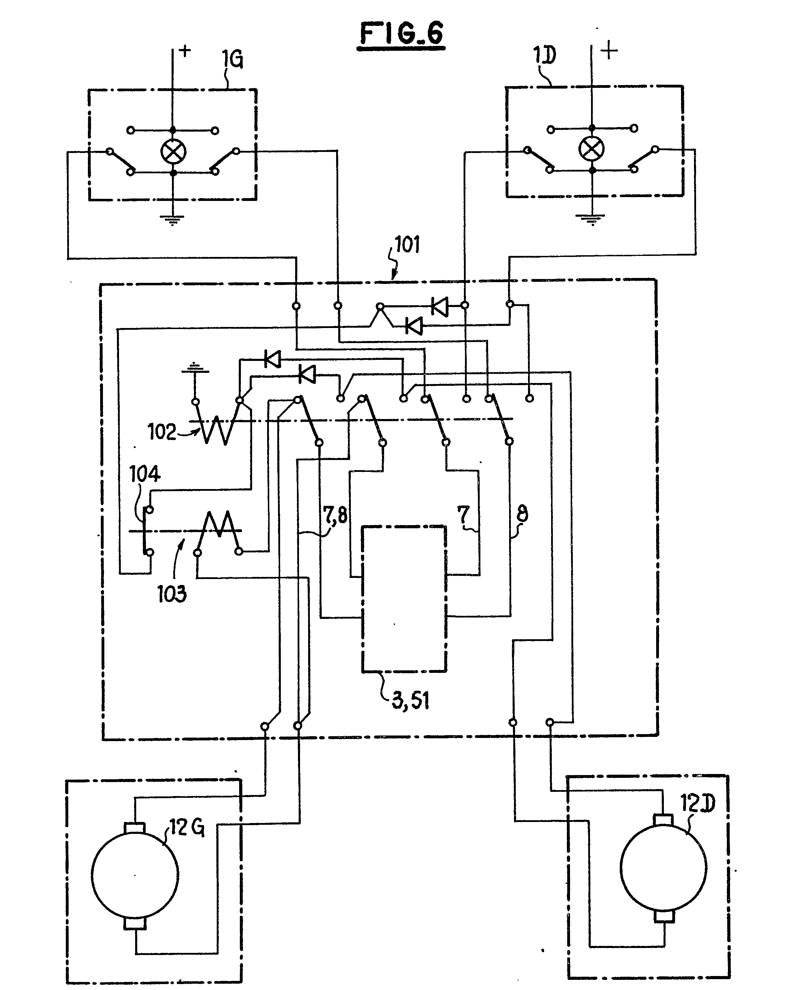

Mais il est également possible de monter le boîtier de commande en dehors de la portière, cas qui est représenté sur la Fig. 5. Le schéma de la Fig. 5 s'applique tant au montage à la fabrication qu'à un montage sur un véhicule déjà équipé d'un lève-vitre. Dans ces conditions, le boîtier de commande 3, 51 est placé de préférence non loin du sélecteur 1. Le faisceau 95 qui dans un montage classique était connecté au sélecteur est dans ce cas raccordé au boîtier de commande 3,51 tandis que le faisceau 96 relié au sélecteur 1 est connecté à ce même boîtier. On n'a donc besoin de constituer qu'un seul faisceau supplémentaire entre le sélecteur 1 et le boîtier de commande.

La Fig. 6 représente une variante de montage dans lequel on n'utilise qu'un seul boîtier de commande 3,51 pour la commande des portières de gauche et de droite (avant ou arrière) moyennant un circuit supplémentaire de commutation 101. Ce circuit est raccordé à deux moteurs de lève-vitre 12G et 12D respectivement et à deux sélecteurs correspondants 1G et 1D. Ce montage comporte également un relais d'inversion gauche-droite 102 dont la bobine commande quatre inverseurs des conducteurs 7 et 8 du boîtier de commande 3,51. Suivant l'excitation du relais 102, le boîtier de commande 3,51 est donc connecté au lève-vitre de gauche ou de droite. Le montage est par ailleurs étudié pour que lorsque le côté droit est actionné toute action sur le sélecteur 1G est neutralisée et inversément. Dans le montage représenté, la priorité est donnée au sélecteur de gauche du conducteur, cette disposition étant bien entendu inversée si le véhicule est équipée pour la conduite à droite. Si le sélecteur 1G est actionné dans un sens ou dans l'autre, le moteur 12G est actionné et un deuxième relais 103 est excité qui par l'intermédiaire de son contact de repos 104 interdit toute alimentation du montage par l'intermédiaire du sélecteur 1D.

Si, au contraire, le sélecteur 1D est actionné, le relais 102 est excité et les inverseurs basculent, l'alimentation du moteur 12G étant neutralisée par l'intermédiaire de ses inverseurs.

## Revendications

1. Boîtier de commande pour moteur d'actionnement de panneau coulissant de véhicule tel qu'une vitre ou analogue, moteur (9) dont l'alimentation peut être commandée dans les deux sens d'ouverture et de fermeture à l'aide d'un sélecteur (1) à deux sections affectées chacune à l'un de ces sens, ce boîtier comportant également des moyens (R–1, 18, 27; RD, RM, 61d, 61m, 69d, 69m) pour permettre la sélection de deux vitesses du moteur (9) en fonction d'une durée d'actionnement initiale du sélecteur (1), supérieure ou inférieure à une première période de temps prédéterminée, lesdits moyens permettant la sélection des deux vitesses du moteur (9) comprenant en outre des moyens (27, R–1, R–2; 61d, 61m, RD, RM) qui, lorsque la petite vitesse de fonctionnement est sélectionnée alimentent le moteur à grande vitesse pendant une seconde période de temps de démarrage prédéterminée et la première période de temps prédéterminée étant assurée par un circuit de temporisation, caractérisé en ce que ledit circuit de temporisation (27; 61d, 61m) est connecté de manière à fixer également la seconde période de temps prédéterminée.

2. Boîtier de commande suivant la revendication 1, caractérisé en ce qu'il comprend un premier dispositif de commutation (R–1; RD, RM) pour fermer un circuit d'alimentation du moteur lorsque ledit sélecteur (1) est actionné, un second dispositif de commutation (R–2; 65d, 65m) capable de couper l'alimentation du premier dispositif de commutation et connecté audit circuit de temporisation (27; 61d, 61m) pour être déclenché après l'écoulement de sa durée de temporisation et capable également d'autoriser l'alimentation du moteur par l'intermédiaire d'une résistance chutrice (18; 82) tant que ledit sélecteur (1) est actionné au-delà de ladite durée.

3. Boîtier de commande suivant la revendication 2, caractérisé en ce que le sens de rotation du moteur (9) en vue de l'entraînement du panneau coulissant dans l'un ou l'autre sens de mouvement est déterminé par un organe de commutation (R–3) commandé pour l'un de ces sens et au repos pour l'autre de ces sens sous l'action dudit sélecteur (1), et en ce que le premier dispositif de commutation (R–1) comporte un relais dont la bobine est montée en série avec un commutateur au repos d'un second relais (R–2), ledit commutateur assurant dans sa position de travail la fermeture du circuit d'alimentation dudit moteur (9) à travers la résistance chutrice (18).

4. Boîtier de commande suivant la revendication 2, caractérisé en ce que ledit premier dispositif de commutation comporte deux relais (RD, RM) affectés respectivement à chaque sens de mouvement dudit panneau coulissant, et muni d'un contact inverseur (RD–1, RM–1) qui au repos insère la résistance chutrice (82) dans le circuit d'alimentation du moteur (9) et qui en position de travail n'insère cette résistance dans le circuit du moteur que pour un seul sens de rotation de celui-ci, lesdits relais comportant des bobines montées dans les circuits collecteur-émetteur de transistors associés (65d, 65m) dont les bases sont connectées audit circuit de temporisation (61d, 61m), et en ce que ledit sélecteur (1) est inséré directement dans le circuit d'alimentation du moteur (9) passant par lesdits inverseurs (RD–1, RM–1) en position de repos.

5. Boîtier de commande suivant l'une quelconque des revendications 1 à 4, caractérisé en ce qu'il comprend en outre un détecteur (D) d'intensité de courant du type magnétique comportant un organe de commutation (Db) capable d'inverser l'alimentation du moteur (12) lorsque l'intensité du courant qui le traverse dépasse une valeur prédéterminée.

6. Boîtier suivant les revendications 3 et 5 prises ensemble, caractérisé en ce que l'organe de commutation (Db) du détecteur d'intensité (D) est inséré dans un circuit commandant ledit organe de commutation (R–3).

7. Boîtier suivant les revendications 4 et 5 prises ensemble, caractérisé en ce que ledit organe de commutation (Db) est connecté à la première entrée d'une porte ET (89; 91) dont la seconde entrée est reliée dans le circuit du moteur (9) assurant l'un des sens d'entrainement de celui-ci, et en ce que la sortie de ladite porte ET est montée de manière à fermer le circuit du moteur pour l'entraînement dans le sens opposé.

8. Boîtier suivant l'une quelconque des revendications 1 à 7, caractérisé en ce qu'il est prévu des moyens (35) pour court-circuiter les bornes dudit moteur (9) dès que son alimentation n'est plus assurée.

9. Boîtier suivant la revendication 8, caractérisé en ce que lesdits moyens de court-circuit comportent un transistor (35) sensible à une inversion de polarité des bornes du moteur après suppression de l'alimentation de celui-ci, ce transistor étant capable de court-circuiter ces bornes pour provoquer l'arrêt brusque du moteur immédiatement après cette suppression.

10. Boîtier suivant la revendication 9, caractérisé en ce qu'il est prévu des moyens (17, 38) pour permettre une commande du moteur (9) dans un sens prédéterminé par un organe de commutation (39, 43) autre que ledit détecteur en vu de la fermeture simultanée de plusieurs panneaux coulissants.

11. Boîtier suivant l'une quelconque des revendications 1 à 10, caractérisé en ce qu'il comporte en outre des moyens (102, 103) pour la commande alternée des moteurs d'entraînement (12G, 12D) de plusieurs panneaux coulissants.

**Ansprüche**

1. Steuergerät für den Antriebsmotor eines flachen Schiebeteils wie. z.B. einer Fensterscheibe oder dergleichen eines Kraftfahrzeugs, wobei die Motorspeisung mittels eines zwei-Richtungs-Wählschalters (1) zum Öffnen und Schliessen gesteuert werden kann, das Steuergerät Mittel (R-1, 18, 27; RD, RM, 61d, 61m, 69d, 69m) aufweist, zum Wählen zweier Motorgeschwindigkeiten in Abhängigkeit von der Dauer der anfänglichen Betätigung des Wählschalters, die länger oder kürzer ist als ein erstes vorbestimmtes Zeitintervall, wobei diese Mittel zum Wählen zweier Motorgeschwindigkeiten ferner Mittel (27, R-1, R-2; 61d, 61m, RD, RM), die den Motor (9) während eines zweiten vorbestimmten Anlassintervalls für den Betrieb mit grosser Geschwindigkeit speisen, wenn die kleine Betriebsgeschwindigkeit gewählt ist, aufweisen und wobei das erste vorbestimmte Zeitintervall mittels einer Verzögerungsschaltung festgelegt wird, dadurch gekennzeichnet, dass die Verzögerungsschaltung (27; 61d, 61m) auch zum Festlegen des zweiten vorbestimmten Zeitintervalls verschaltet ist.

2. Steuergerät nach Anspruch 1, gekennzeichnet durch einen ersten Umschalter (R-1; RD, RM) zum Schliessen eines Speisekreises des Motors wenn der Wählschalter (1) betätigt wird, einen zweiten Umschalter (R-2; 65d, 65m) zum Unterbrechen der Versorgung des ersten Umschalters, wobei der zweite Umschalter an die Verzögerungsschaltung (27; 61d, 61m) geschaltet ist, um aktiviert zu werden, wenn die Verzögerungszeit abgelaufen ist und wobei der zweite Umschalter die Motorspeisung über einen Vorwiderstand (18; 82) autorisieren kann, solange wie der Wählschalter (1) über die besagte Dauer hinaus betätigt wird.

3. Steuergerät nach Anspruch 2, , dadurch gekennzeichnet, dass der Drehsinn des Motors (9) zum Antreiben des flachen Schiebeteils in der einen oder anderen Bewegungsrichtung durch einen Umschalter (R-3) bestimmt wird, der durch den Wählschalter (1) für einen Drehsinn und für den anderen Drehsinn in Ruhestellung gesteuert wird und dadurch, dass der erste Umschalter (R-1) einen Relais aufweist, dessen Spule in Reihe mit einem Umschalter in Ruhestellung eines zweiten Relais (R-2) geschaltet ist, wobei dieser Umschalter in Betriebsstellung die Speiseschaltung des Motors (9) über den Vorwiderstand (18) schliesst.

4. Steuergerät nach Anspruch 2, , dadurch gekennzeichnet, dass der erste Umschalter zwei Relais (RD, RM) aufweist, die jeweils einem Richtungssinn des flachen Schiebeteils zugeordnet und mit einem Wechselkontakt(RD-1, RM-1)versehen sind, der den Vorwiderstand (82) in Ruhestellung in die Speiseschaltung des Motors (9) und in Betriebsstellung nur für einen Drehsinn des Motors in die Motorschaltung einfügt, wobei die Relais Spulen aufweisen, die in die Kollektor-Emitter-Strecken assoziierter Transistoren (65d, 65m) geschaltet sind, deren Basen an Verzögerungsschaltung (61d, 61m) geschaltet sind und dadurch, dass der Wählschalter (1) direkt in die Versorgungsschaltung des Motors (9) über die sich in Ruhestellung befindenden Umschalter (RD-1, RM-1) eingefügt ist.

5. Steuergerät nach einem der Ansprüche 1–4, gekennzeichnet durch ein magnetisch arbeitendes Strommessgerät (D) mit einem Umschalter (Db) zum Investieren der Motorversorgung (12) wenn die ihn durchfliessende Stromstärke einen vorbestimmten Wert übersteigt.

6. Steuergerät nach den Ansprüchen 3 und 5 zusammengenommen, dadurch gekennzeichnet, dass der Umschalter (Db) des Strommessgerätes (D) in eine Steuerschaltung für den Umschalter (R-3) eingefügt ist, der die Umkehrung des Drehsinns des Motors bewirkt.

7. Steuergerät nach den Ansprüchen 4 und 5 zusammengenommen, dadurch gekennzeichnet, dass der Umschalter (Db) an den ersten Eingang eines Und-gates (89; 91) geschaltet ist, dessen zweiter Eingang in der Motorschaltung verschaltet ist, die die Drehung des Motors in einem Drehsinn bewirkt und dadurch, dass der Ausgang des Und-gates so verschaltet ist, dass die Motorschaltung zum Drehen des Motors im umgekehrten Drehsinn geschlossen ist.

8. Steuergerät nach einem der Ansprüche 1–7, dadurch gekennzeichnet, dass ein Mittel (35) zum Kurzschliessen der Motoranschlüsse, wenn dessen Speisung nicht mehr gewährleistet ist, vorgesehen ist.

9. Steuergerät nach Anspruch 8, dadurch gekennzeichnet, dass dieses Mittel zum Kurzschliessen einen auf eine Umkehrung der Polarisation der Anschlüsse des Motors nach dem Ausfallen der Motorversorgung ansprechenden Transistor (35) aufweist, der die Anschlüsse kurzschliessen kann, um das sofortige Anhalten des Motors direkt nach dem Ausfallen der Versorgung zu bewirken.

10. Steuergerät nach Anspruch 9, gekennzeichnet durch Mittel (17, 38) zum Steuern des Motors (9) in einem vorbestimmten Drehsinn mittels einem anderen Umschalter (39, 43) als das Strommessgerät zum gleichzeitigen Schliessen mehrerer flacher Schiebeteile.

11. Steuergerät nach einem der Ansprüche 1–10, gekennzeichnet durch weitere Mittel (102, 103) zum abwechselnden Steuern der Antriebsmotoren (12G, 12D) mehrerer flacher Schiebeteile.

### Claims

1. A control box for a motor driving a slidable panel of a vehicle, such as a window glass or the like, the supply of which motor (9) may be controlled in both directions of opening and closing by means of a selector (1) having two sections each allocated to one of these directions, this box further comprising means (R-1, 18, 27; RD, RM, 61d, 61m, 69d, 69m) for permitting the selection of two speeds of the motor (9) as a function of a duration of the initial actuation of the selector (1) which is higher or lower than a first predetermined period of time, said means permitting the selection of the two speeds of the motor (9) further comprising means (27, R-1, R-2; 61d, 61m, RD, RM) which, when the low speed of operation is selected, supply current to the motor at high speed during a second predetermined starting period of time and the first predetermined period of time being ensured by a timing circuit, characterised in that said timing circuit (27; 61d, 61m) is connected in such manner as to determine also the second predetermined period of time.

2. A control box according to claim 1, characterised in that it comprises a first switching device (R-1; RD, RM) for closing a supply circuit of the motor when said selector (1) is actuated, a second switching device (R-2; 65d, 65m) capable of cutting off the supply of the first switching device and connected to said timing circuit (27; 61d, 61m) so as to be actuated after the elapse of its timing duration and also capable of allowing the supply of current to the motor through a series resistor (18; 82) so long as said selector (1) is actuated beyond said duration.

3. A control box according to claim 2, characterised in that the direction of rotation of the motor (9) for driving the slidable panel in either direction of movement is determined by a switching means (R-3) actuated for one of these directions and at rest for the other of these directions under the action of said selector (1), and the first switching device (R-1) comprises a relay whose oil is connected in series with a switch, which is at rest, of a second relay (R-2), said switch ensuring in its operating position the closure of the supply circuit of said motor (9) through the series resistors (18).

4. A control box according to claim 2, characterised in that said first switching device comprises two relays (RD, RM) respectively allocated to each direction of movement of said slidable panel, and provided with a reversing switch (RD-1, RM-1) which, at rest, inserts the series resistor (82) in the supply circuit of the motor (9) and which, in the operating position, inserts this resistor in the circuit of the motor only for a single direction of rotation of the latter, said relays comprising coils connected in the collector-emitter circuits of associated transistors (65d, 65m) whose bases are connected to said timing circuit (61d, 61m) and said selector (1) is directly inserted in the supply circuit of the motor (9) passing through said reversing switches (RD-1, RM-1) in the position of rest.

5. A control box according to any one of the claims 1 to 4, characterised in that it further comprises a detector (D) of current intensity of the magnetic type including a switching means (Db) capable of reversing the supply of the motor (12) when the intensity of the current passing therethrough exceeds a predetermined value.

6. A control box according to claims 3 and 5, taken together, characterised in that the switching means (Db) of the current intensity detector (D) is inserted in a circuit controlling said switching means (R-3) ensuring the reversal of the direction of rotation of the motor (9).

7. A control box according to claims 4 and 5, taken together, characterised in that said switching means (Db) is connected to the first input of an AND gate (89, 91) whose second input is connected in the circuit of the motor (9) ensuring one of the directions of rotation of the latter, and the output of said AND gate is connected in such manner as to close the circuit of the motor for driving in the opposite direction.

8. A control box according to any one of the claims 1 to 7, characterised in that it comprises means (35) for short-circuiting the terminals of said motor (9) as soon as it is no longer supplied with current.

9. A control box according to claim 8, characterised in that said short-circuiting means comprise a transistor (35) responsive to a reversal of the polarity of the terminals of the motor after the cutting off of the supply to the latter, this transistor being capable of short-circuiting these terminals so as to produce the sudden stoppage of the motor immediately after this supply has been cut off.

10. A control box according to claim 9, characterised in that it comprises means (17, 38) for permitting actuation of the motor (9) in a predetermined direction by a switching means (39, 43) other than said detector for the purpose of the simultaneous closure of a plurality of slidable panels.

11. A control box according to any one of the claims 1 to 10, characterised in that it further comprises means (102, 103) for alternately actuating driving motors (12G, 12D) for a plurality of slidable panels.

FIG.1

**FIG.2**

vers 15   vers diode 33

**FIG.3**

**FIG.5**

FIG. 4

# FIG.4A

# FIG.6